# NEUE EUROPÄISCHE PATENTSCHRIFT

(11) **EP 0 547 337 B2**
(45) Veröffentlichungstag und Bekanntmachung des Hinweises auf die Entscheidung über den Einspruch: **11.08.1999**
(45) Hinweis auf die Patenterteilung: 13.03.1996
(21) Anmeldenummer: 92118233.3
(22) Anmeldetag: 24.10.1992
(51) Int. Cl.: B60S 1/08

(54) **Einrichtung zur Steuerung einer Scheibenwischanlage**
Device for controlling a windscreen wiping system
Dispositif de commande d'un système d'essuie-glaces

(30) Priorität: 14.12.1991 DE 4141348; 26.05.1992 DE 4217391
(43) Veröffentlichungstag der Anmeldung: 23.06.1993
(73) Patentinhaber: Leopold Kostal GmbH & Co. KG, 58507 Lüdenscheid (DE)
(72) Erfinder: Levers, Jürgen, W-4630 Bochum 7 (DE)

(56) Entgegenhaltungen:
- EP-A- 0 438 633
- WO-A-90/08680
- WO-A-91/07298
- WO-A-91/09756
- DD-A- 277 437
- DE-A- 2 523 111
- DE-A- 2 645 391
- DE-A- 3 203 091
- DE-A- 3 515 409
- DE-A- 3 722 510
- DE-A- 3 733 761
- DE-A- 3 902 231
- DE-A- 3 930 732
- DE-C- 3 314 770
- DE-C- 3 902 231
- DE-C- 4 011 510
- US-A- 4 317 073
- US-A- 4 463 294
- US-A- 4 689 536
- US-A- 4 710 878

## Beschreibung

Die vorliegende Erfindung geht von einer gemäß dem Oberbegriff des Hauptanspruches konzipierten Einrichtung zur Steuerung einer Scheibenwischanlage aus, wie sie aus der US-A-4 317 073 bekannt ist.

Derartige Einrichtungen sind insbesondere dafür vorgesehen, einen auf der Front- oder der Heckscheibe eines Kraftfahrzeuges vorhandenen flüssigen oder festen Belag qualitativ und quantitativ zu erfassen und in Abhängigkeit davon eine der Scheibe zugeordnete Scheibenwischanlage automatisch zu beeinflussen, d. h., dieselbe zur Reinigung der Scheibe insbesondere intervallmäßig in Betrieb zu setzen.

Durch die DE 33 14 770 C1 ist eine Einrichtung zum Steuern eines Wischermotors bekanntgeworden, die eine optoelektronische Sensorvorrichtung und eine mit dem Antriebsmotor verbundene Schaltungsanordnung aufweist, so daß in Abhängigkeit von dem auf der Scheibe vorhandenen Belag eine Steuerung des Antriebsmotors vorgenommen werden kann. Diese Einrichtung weist jedoch keine Mittel auf, die eine Feststellung des eine letzte Säuberung des Meßbereiches der Sensorvorrichtung hervorrufenden letzten Überwischvorgangs bezogen auf einen Wischzyklus erlaubt. So kann die Einrichtung die Wischzyklushäufigkeit zwar an die während des Wischbetriebes sich quantitativ ändernden Zustände des Belages auf der Scheibe, wie z. B. Verschmutzungsgrad, mengenmäßiges Auftreffen von Regen bzw. Schnee, einigermaßen zufriedenstellend automatisch unpassen. Eine genaue automatische Anpassung der Wischzyklushäufigkeit an sich qualitativ sowie quantitativ ändernde Zustände des Belages auf der Scheibe ist jedoch nicht zufriedenstellend möglich. Außerdem tritt bei solchen Einrichtungen zur Steuerung einer Scheibenwischanlage unter bestimmten Bedingungen ein hektisches Ein- und Ausschalten bzw. ein hektisches Hin- und Herschalten zwischen dem Intervallwischbetrieb und dem Dauerwischbetrieb des Antriebsmotors auf. Dies ist für den Kraftfahrzeugbenutzer zumindest sehr gewöhnungsbedürftig, kann aber darüberhinaus auch zu unangenehmen Irritationen führen. Des weiteren weist diese Einrichtung keine Mittel auf, die eine Feststellung der auf die Scheibe auftreffenden Regentropfen bezüglich deren Größe ermöglicht. Eine genaue automatische Anpassung der Wischzyklushäufigkeit an den sich durch die unterschiedliche Größe der auftreffenden Regentropfen ergebenden unterschiedlichen Beeinträchtigungsgrad der Sichtverhältnisse ist jedoch wegen der im Verhältnis zur Scheibe relativ kleinen Meßfläche der Sensorvorrichtung nicht zufriedenstellend möglich. So hat der Kraftfahrzeugbenutzer in dem einen Fall das Gefühl, daß geringfügig zu häufig und in dem anderen Fall das Gefühl, daß geringfügig nicht häufig genug gewischt wird.

Der vorliegenden Erfindung liegt deshalb die Aufgabe zugrunde, eine Einrichtung zur Steuerung einer Scheibenwischanlage zu schaffen, die die Wischzyklushäufigkeit automatisch auf sich qualitativ und/oder quantitativ ändernde Zustände des auf der Scheibe vorhandenen Belages sehr feinfühlig abstimmt.

Erfindungsgemäß wird diese Aufgabe durch die im Hauptanspruch angegebenen Merkmale gelöst. Vorteilhaft bei einer derartigen Ausgestaltung einer Einrichtung zur Steuerung einer Scheibenwischanlage ist, daß deren Schalteranordnung ohne eine separate Schaltstufe für den Intervallwischbetrieb auskommt, weil die Einrichtung automatisch in der Schaltstufe Dauerwischen I auch den Intervallwischbetrieb der Scheibenwischanlage entsprechend des auf der Scheibe vorhandenen Belages mit übernimmt. Es gibt somit bei der Schalteranordnung nur noch die Wischstufen Wischer Aus, Automatik mit den Funktionen Intervallwischen und Dauerwischen in der Geschwindigkeitsstufe I und Dauerwischen in der Geschwindigkeitsstufe II. Ein erheblicher Verkabelungsaufwand wird somit eingespart.

Des weiteren ist es besonders vorteilhaft, daß Wischzyklen mit harmonischem Wischzykluscharakter sich ergeben, so daß für den Kraftfahrzeugbenutzer eindeutig tolerierbare Ein- bzw. Ausschaltaktivitäten sowie Umschaltaktivitäten zwischen dem Intervallwischbetrieb und dem Dauerwischbetrieb eintreten und zwar dadurch, daß die Schaltungsanordnung zur Beeinflussung des Antriebsmotors mit einer Einschaltschwelle und einer Ausschaltschwelle für den Intervallwischbetrieb sowie einer davon unterschiedlichen weiteren Ausschaltschwelle für den Dauerwischbetrieb versehen ist.

Außerdem ist besonders günstig, wenn der Wischbetrieb einer Scheibenwischanlage auch in Abhängigkeit der auf die Scheibe auftreffenden Regenformen (große bzw. kleine Regentropfen) besonders feinfühlig abgestimmt wird ohne daß es einer Vergrößerung der Meßfläche der Sensorvorrichtung bedarf. Dies wird dadurch erreicht, daß die Schalteranordnung mit einer zumindest zwei Zählerelemente aufweisenden Regenformerfassungseinrichtung versehen ist, wobei von der Regenformerfassungseinrichtung nur die von der Sensoreinrichtung während des Erfassungszeitraumes abgegebenen Signalen erfaßt werden, die eine vorgegebene Änderungsgeschwindigkeit überschreiten. Bei diesen die Änderungsgeschwindigkeit überschreitenden Signalen erfaßt die Regenformerfassungseinrichtung die Amplitude der Signaländerung, wobei in dem Fall, wenn die Amplitude unterhalb eines festgelegten Grenzwertes bleibt, eine wertmäßige Änderung des einen der beiden Zählerelemente erfolgt und dann, wenn die Amplitude über diesen festgelegten Grenzwert hinausgeht, sich eine wertmäßige Änderung des anderen der beiden Zählerelemente ergibt, wobei die Inhalte der beiden Zählerelemente zur Festlegung einer Wischstrategie von der Schaltungsanordnung ausgewertet werden und bis maximal kurz vor Beginn eines neuen Erfassungszeitraumes gespeichert bleiben.

Weitere vorteilhafte Ausgestaltungen des erfindungsgemäßen Gegenstandes sind in den Unteransprüchen angegeben und werden anhand eines in der Zeichnung dargestellten Ausführungsbeispieles näher erläutert. Dabei zeigen
- Fig. 1: ein Blockschaltbild einer Scheibenwischanlage
- Fig. 2: ein Funktionsdiagramm mit einem typischen, durch eine Sensorvorrichtung hinsichtlich eines Belages erzeugten Signalverlauf
- Fig. 3: ein Funktionsdiagramm einer mit einer Schalteranordnung und einem Antriebsmotor verbundenen Schaltkontakteinrichtung
- Fig. 4: ein Diagramm mit den verschiedenen Einschalt- bzw. Ausschaltschwellen
- Fig. 5: ein Diagramm bei dem das Anheben der Einschaltschwelle dargestellt ist
- Fig. 6: ein Diagramm mit einem für eine weitere bestimmte Regenform typischen Signalverlauf, sowie die dazugehörige Scheibenwischerfunktion
- Fig. 7: ein Diagramm mit einem für eine weitere bestimmte Regenform typischen Signalverlauf, sowie die dazugehörige Scheibenwischerfunktion
Wie aus der Zeichnung hervorgeht, besteht eine Einrichtung zur Steuerung einer Scheibenwischanlage im wesentlichen aus einer Schalteranordnung 1, einer optoelektronischen Sensorvorrichtung 2 und einer Schaltungsanordnung 3. Über die Schalteranordnung 1 wird einerseits die Sensorvorrichtung 2 bzw. die Schaltungsanordnung 3 und andererseits ein die Scheibenwischarme bzw. die Scheibenwischblätter 5 betätigender Antriebsmotor 4 aktiviert. Dem Antriebsmotor 4 ist dabei eine Schaltkontakteinrichtung 6 zugeordnet, durch welche für die der Schaltungsanordnung 3 zugeordneten Laufzeiterfassungsanordnung die Erkennung der Parkstellung und das Start- bzw. Endsignal der Laufzeit der Scheibenwischblätter 5 möglich ist Außerdem weist die Schaltungsanordnung 3 ein integriertes, als Signalmustererkennungsanordnung ausgebildetes Mittel sowie eine zumindest zwei Zählerelemente aufweisende Regenformerfassungseinrichtung 8 auf.

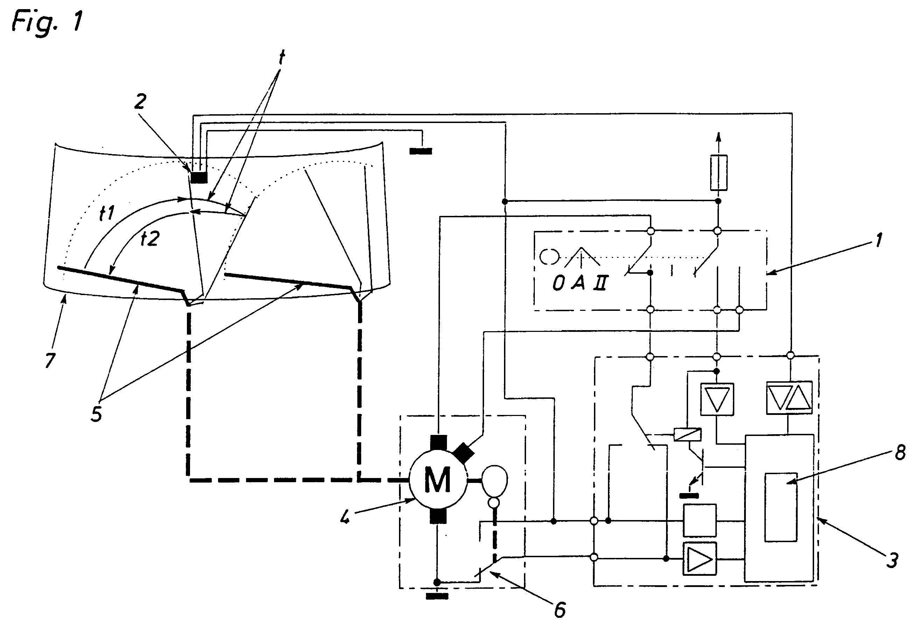

Wie insbesondere aus der Fig. 1 hervorgeht, muß zur Aktivierung der Scheibenwischanlage die Schalteranordnung 1 aus ihrer Schaltstufe Aus O in ihre Schaltstufe Automatik A gebracht werden. In der Schaltstufe Automatik A sind die Funktionen Intervallwischen und Dauerwischen in der Geschwindigkeitsstufe I vereint. Außerdem kann die Schalteranordnung 1 in die Schaltstufe Dauerwischen II gebracht werden, in der die Scheibenwischanlage in der Geschwindigkeitsstufe II betrieben wird. Wird die Schalteranordnung 1 in ihre Schaltstufe Automatik A gebracht, wird zur Bildung eines Ausgangsreferenzwertes auf jeden Fall ein Wischzyklus t ausgelöst. Befindet sich bei eingeschalteter Schaltstufe Automatik A ein Belag (z.B. Regen) auf der Außenfläche der Scheibe 7, so läuft das eine der beiden Scheibenwischblätter 5 zur Säuberung der Außenfläche während eines Wischzyklusses t zweimal über den Meßbereich der Sensorvorrichtung 2. Die Sensorvorrichtung 2 ist optoelektronisch aufgebaut bzw. wird optoelektronisch betrieben und ist auf der Innenfläche der Scheibe 7 angebracht, so daß das Scheibenwischblatt 5 nicht in direkten Kontakt mit der Sensorvorrichtung 2 kommt. Nach dem Start eines Wischzyklusses t wird zuerst der Meßbereich der Sensorvorrichtung 2 beim Hochlaufen und dann zum zweiten Mal beim Zurücklaufen vom Scheibenwischblatt 5 überwischt und somit zweimal gesäubert. Erkennt die Schaltungsanordnung 2 durch die Signale der Sensorvorrichtung 2 nach dem zweiten Überwischvorgang während eines Wischzyklusses t einen neuerlich, die Sicht stark beeinträchtigenden Belag (z.B. starker Regen) auf der Außenfläche der Scheibe 7, so wird, nachdem das Scheibenwischblatt 5 seine Parkstellung erreicht hat (Ende des Wischzyklusses t), sofort ein neuer Wischzyklus t gestartet. Erkennt die Schaltungsanordnung 3 durch die Sensorvorrichtung 2 jedoch nach dem zweiten Überwischvorgang während eines Wischzyklusses t einen neuerlich, die Sicht im geringen Umfang beeinträchtigenden Belag (z.B. leichter Regen) auf der Außenfläche der Scheibe 7, so wird, nachdem das Scheibenwischblatt 5 seine Parkstellung erreicht hat (Ende des Wischzyklusses t), dieses für eine bestimmte Zeit (Intervallpause tp) durch die Schaltkontakteinrichtung 6 in der Parkstellung festgehalten. Die Länge der Intervallpause tp wird dabei in Abhängigkeit des sich neu auf der Scheibe 7 bildenden Belages (z.B. Regenintensität) nach jedem Wischzyklus neu ermittelt. Um diese Steuerung des Antriebsmotors 4 vornehmen zu können, werden die durch den auf der Scheibe 7 vorhandenen Belag (z.B. Regen) erzeugten Signale der Sensorvorrichtung 2 der Schaltungsanordnung 3 zugeführt. Eine Änderung der Signale wird durch die sich qualitativ und/oder quantitativ ändernden Zustände des Belages hervorgerufen, wobei die dadurch entstehenden Signale der Schaltungsanordnung 3 zugeführt und von dieser zu Steuersignalen umgeformt werden, durch die der Betrieb des Antriebsmotors 4 entsprechend beeinflußt wird. Um den Raumbedarf und den Verkabelungsaufwand möglichst gering zu halten, sind die Sensorvorrichtung 2 und die Schaltungsanordnung 3 mit ihren wesentlichen Elementen in einem gemeinsamen Gehäuse untergebracht. Zur Auswertung der Signale der Sensorvorrichtung 2 beinhaltet die Schaltungsanordnung 3 einen Mikroprozessor.

Damit die Wischzyklushäufigkeit auf sich qualitativ und/oder quantitativ ändernde Zustände des auf der Scheibe 7 vorhandenen Belages (z.B. Regen) besonders feinfühlig eingestellt werden kann, ist eine genaue Festlegung des Bewertungszeitpunktes und der Bewertungsdauer des Belages durch die Schaltungsanordnung 3 notwendig.

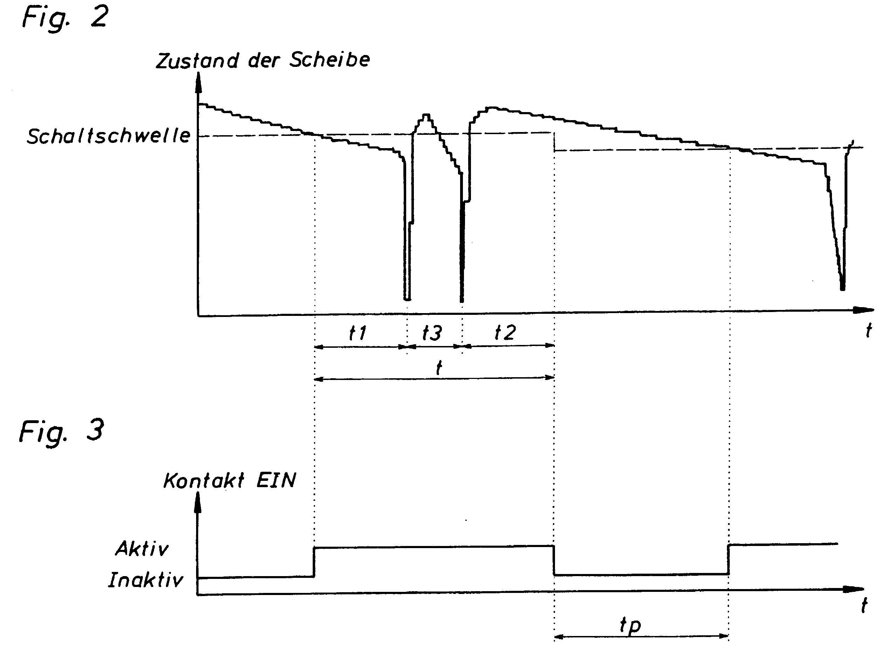

Wie insbesondere aus der Fig. 2 hervorgeht, kann anhand des Sensorsignalverlaufes erkannt werden, wann das Scheibenwischblatt 5 den Meßbereich der Sensorvorrichtung 2 überwischt hat. Dies kann durch den typischen Verlauf der Signale sowohl für das erste als auch für das zweite Überwischen des Scheibenwischblattes 5 während eines Wischzyklusses t erkannt werden.

Um möglichst genau reproduzierbare Bewertungsbedingungen zu erhalten, ist es deswegen einerseits notwendig, daß zur Bewertung des auf der Scheibe 7 vorhandenen Belages nur die von der Sensorvorrichtung 2 an die Schaltungsanordnung 3 abgegebenen Signale zur Beeinflussung des Antriebsmotors 4 Verwendung finden, welche ausgehend vom Zeitpunkt kurz nach dem letzten Überwischvorgang bis zum Einleiten eines neuen Wischzyklusses t von der Sensorvorrichtung 2 erzeugt werden. Dabei wird ein neuer Wischzyklus t eingeleitet, wenn das Signal der Sensorvorrichtung 2 eine bestimmte Schaltschwelle unterschreitet. Unsicherheiten können jedoch dann auftreten, wenn durch bestimmte qualitativ und/oder quantitativ auftretende Zustände des Belages (z.B. Regen) auf der Scheibe 7 Signalverläufe erzeugt werden, die den typischen Verlauf der Signale für den Überwischvorgang des Scheibenwischblattes 5 sehr ähnlich sind, so daß in sehr seltenen Fällen Fehlfunktionen nicht ganz ausgeschlossen werden können. So ist es andererseits zur Betrachtung bestimmter qualitativer und/oder quantitativer Zustände des Belages (z.B. Regen) auf der Scheibe 7 besonders vorteilhaft, daß zusätzlich vor dem Überwischen des Meßbereiches der Sensorvorrichtung 2 der Zeitbereich des Überwischvorganges der Schaltungsanordnung 3 schon vorher bekannt ist.

Zur Erkennung des Zeitbereiches des letzten Überwischvorganges bezogen auf einen Wischzyklus t, ist in die Schaltungsanordnung 3 eine Laufzeiterfassungsanordnung integriert. Die Laufzeiterfassungsanordnung erhält von der Kontakteinrichtung 6 die Informationen, wann die Scheibenwischblätter 5 ihre Parkstellung verlassen (Startsignal), womit ein Wischzyklus t eingeleitet wird und wann die Scheibenwischblätter 5 ihre Parkstellung wieder einnehmen (Endsignal), womit dieser Wischzyklus t abgeschlossen wird. Die gesamte aktive Zeit der Schaltkontakteinrichtung 6 entspricht somit der gesamten Laufzeit der Scheibenwischblätter 5 während eines Wischzyklusses t.

Damit die Schaltungsanordnung 3 den letzten Überwischvorgang, bezogen auf einen Wischzyklus t, genau vorbestimmen kann, wird der Wischzyklus t von der Laufzeiterfassungsanordnung in einzelne Laufzeiten t1 und t2 aufgegliedert. Die Laufzeit t1 entspricht dabei der Zeitspanne vom Startsignal (Hochlaufen der Scheibenwischblätter 5) eines Wischzyklusses t bis zum Erreichen des Meßbereiches der Sensorvorrichtung 2 (ein Überwischen des Meßbereiches hat gerade noch nicht begonnen) und die Laufzeit t2 entspricht der Zeitspanne zwischen dem Abschluß des zweiten Überwischvorganges (ein zweites Überwischen des Meßbereiches wurde gerade abgeschlossen) bis zum Endsignal des Wischzyklusses t (die Scheibenwischblätter 5 nehmen ihre Parkstellung wieder ein). Die beiden Laufzeiten t1 und t2 sind bis auf vernachlässigbare geringe Unterschiede von ihrem Wert fast identisch. Zur Ermittlung der beiden Laufleiten t1 und t2 wird - wie oben beschrieben - die gesamte aktive Zeit der Schaltkontakteinrichtung 6 erfaßt Diese gesamte aktive Zeit der Schaltkontakteinrichtung 6 wird mit einem der Scheibenwischanlage spezifischen Faktor X beaufschlagt, so daß sich der Zeitwert für die Laufzeite t1 bzw. t2 ergibt. Mit diesen Zeitwerten ist die Schaltungsanordnung 3 in der Lage, den Zeitpunkt des zweiten Überwischvorganges auszurechnen bzw. vorberzubestimmen. Der Faktor X ist z.B. abhängig von der Position der Sensorvorrichtung 2 an der Scheibe 7 und den sonstigen für Scheibenwischanlagen spezifischen Verhältnissen. Wichtig ist dabei, daß der Faktor X auf die Gesamtlaufzeit eines Wischzyklusses t der Scheibenwischanlage normiert wird, um so unabhängig von z.B. Spannungsschwankungen, Alterungseffekten, Temperaturveränderungen usw. zu sein. Die Laufzeiterfassungsanordnung und die Signalmustererkennungsanordnung sind dabei derart miteinander verknüpft, daß über die Lebensdauer der Scheibenwischanlage eine automatische Anpassung des Faktors X erfolgt. Eine automatische Anpassung erfolgt dabei dann, wenn die Schaltungsanordnung 3 regelmäßig ein Überwischen feststellt, das nicht mehr in den vorbestimmten Zeitbereich fällt.

Die Fig. 2 beschreibt in einem Funktionsdiagramm einen typischen, in Bezug auf einen auf der Scheibe 7 vorhandenen Belag von der Sensorvorrichtung 2 abgegebenen Signalverlauf. Auf die X-Achse dieses Funktionsdiagrammes ist dabei die Zeit und auf die Y-Achse der Zustand der Scheibe 7 aufgetragen. Ändert sich der Zustand der Scheibe 7 z.B. durch Regen, ändert sich auch der durch die Sensorvorrichtung 2 erzeugte Signalwert bei eingeschalteter Schalteranordnung 1 in der Schaltstufe Automatik A. Nach einem bestimmten Zeitraum kommt es dazu, daß der Signalwert der Sensorvorrichtung 2 die festgelegte Schaltschwelle unterschreitet. Ein Wischzyklus t wird somit automatisch ausgelöst. Der Signalwert fällt z.B. weiter wegen auftretendem Regen recht kontinuierlich ab, bis zu dem Zeitpunkt, wo das Scheibenwischblatt 5 den Meßbereich der Sensorvorrichtung 2 zum ersten Mal erreicht hat. Die bis jetzt verstrichene Zeitspanne entspricht der Laufzeit t1. Der Signalwert der Sensorvorrichtung 2 fällt nun abrupt ab, weil das Scheibenwischblatt 5 den Meßbereich zum ersten Mal überwischt und dabei einen Teil des Belages z.B. Regen vor sich herschiebt. Der Meßbereich ist nach dem ersten Überwischvorgang gesäubert, wodurch dann der Signalwert der Sensorvorrichtung 2 abrupt wieder ansteigt. Dann baut sich der Belag z.B. durch Regen kontinuierlich wieder auf, wodurch der Signalwert kontinuierlich wieder abfällt, bis das Scheibenwischblatt 5 zum zweiten Mal den Meßbereich der Sensorvorrichtung 2 erreicht hat. Der Signalwert der Sensorvorrichtung 2 fällt wiederum abrupt ab, weil das Scheibenwischblatt den Meßbereich zum zweiten Mal überwischt und dabei wiederum einen Teil des sich z.B. durch Regen neu gebildeten Belages vor sich herschiebt. Der Meßbereich der Sensorvorrichtung 2 ist nach dem zweiten Überwischvorgang wiederum gesäubert, wodurch der Signalwert wiederum abrupt ansteigt. Die Zeitspanne, die das Scheibenwischblatt 5 benötigt, um direkt nach dem zweiten Überwischvorgang wieder in seine Parkstellung zu gelangen, entspricht der Laufzeit t2.

Wie insbesondere aus den Figuren 2 und 3 hervorgeht, beginnt die aktive Zeit der Schaltkontakteinrichtung 6 mit dem Einleiten eines Wischzyklusses t. Die schon definierten Laufzeiten t1 und t2 zählen dabei ebenso zur aktiven Zeit der Schaltkontakteinrichtung 6 wie der zwischen diesen beiden Laufzeiten t1 und t2 liegende Laufzeitbereich t3. Die Laufzeiten t1 und t2 sowie der Laufzeitbereich t3 stellen somit die einen Wischzyklus t betreffende gesamte aktive Zeit der Schaltkontakteinrichtung 6 dar. Gegebenenfalls schließt sich an einen Wischzyklus t eine Intervallpause tp an. Bei jedem Wischzyklus t wird die Laufzeit t2 von der Schaltungsanordnung 3 dazu ausgenutzt, um die Schaltschwelle in Abhängigkeit des ermittelten Referenzwertes neu festzulegen. Hingegen wird die Laufzeit t2 und gegebenenfalls die Intervallpause tp von der Schaltungsanordnung 3 dazu ausgenutzt, um zu entscheiden, wann ein neuer Wischzyklus ausgelöst werden soll.
Der sich kurz nach dem zweiten Überwischvorgang innerhalb der Laufzeit t2 einstellende maximale Signalwert der Sensorvorrichtung 2, wird für den nächsten Wischzyklus t als neuer Referenzwert in die Schaltungsanordnung 3 eingelesen. Abhängig von diesem Referenzwert wird automatisch die als Startwert für den nachfolgenden Wischzyklus t dienende Schaltschwelle festgelegt, dessen Größenordnung etwa 95% des neuen Referenzwertes beträgt.

Wird die Schaltschwelle zumindest mit Erreichen der Parkstellung der Scheibenwischblätter 5 durch einen sich z.B. durch Regen neu bildenden Belag vom Signalwert der Sensorvorrichtung 2 wieder unterschritten, so wird von der Schaltungsanordnung 3 sofort ein neuer Wischzyklus t eingeleitet. Wird die Schaltschwelle mit Erreichen der Parkstellung des Scheibenwischblattes 5 vom Signalwert der Sensorvorrichtung 2 jedoch nicht unterschritten, so schließt sich an die Laufzeit t2 eine Intervallpause tp an. Die Intervallpause tp ergibt sich in Abhängigkeit der Zeitspanne, die verstreicht, bis der durch den sich neu bildenden Belag, z.B. Regen hervorgerufene Signalwert der Sensorvorrichtung 2 unterschritten wird.

Sollte es während des als Maximum für die Intervallpause festgelegten Zeitraumes (z.B. eine Minute) nicht zu einer ausreichenden Bildung eines Belages z.B. durch Regen kommen, so daß der Signalwert der Sensorvorrichtung 2 die Schaltschwelle nicht unterschreitet, wird auf jeden Fall ein neuer Wischzyklus t ausgelöst. Die Auslösung eines neuen Wischzyklusses t dient dabei einerseits dazu, die Bildung eines neuen Ausgangsreferenzwertes zu ermöglichen und andererseits dazu, um dem Benutzer anzuzeigen, daß sich die Schalteranordnung 1 in ihrer Schaltstufe Automatik A befindet. Gegebenenfalls ist es in dieser Situation notwendig, die Schalteranordnung 1 in ihre Schaltstufe Aus O zu bringen, um störende Wischzyklen t zu vermeiden.

Wie bereits beschrieben, kann einerseits durch den typischen Verlauf der Sensorsignale und durch die Signalmustererkennungsanordnung der zweite Überwischvorgang des Scheibenwischblattes 5 über den Meßbereich der Sensorvorrichtung 2 festgestellt werden. Andererseits ist dies durch die Laufzeiterfassungsanordnung möglich, die einen gesamten Wischzyklus t in einzelne Laufzeiten t1 und t2 aufgliedert. Die Laufzeit t1 entspricht dabei der Zeitspanne ausgehend vom Startsignal eines Wischzyklus t bis zum Erreichen des Meßbereiches der Sensorvorrichtung 2. Die Laufzeit t2 entspricht der Zeitspanne zwischen dem Abschluß des zweiten Überwischvorganges bis zum Erreichen der Parkstellung der Scheibenwischblätter 5. Die Laufzeit t2 und gegebenenfalls die Intervallpause tp wird von der Schaltungsanordnung 3 dazu ausgenutzt, um zu entscheiden, wann ein neuer Wischzyklus ausgelöst werden soll. Der sich normalerweise kurz nach dem zweiten Überwischvorgang innerhalb der Laufzeit t2 einstellende maximale Signalwert der Sensorvorrichtung 2 wird für den nächsten Wischzyklus t als neuer Referenzwert in die Schaltungsanordnung 3 eingelesen. Abhängig von diesem Referenzwert werden automatisch die als Startwert, als Umschaltwert bzw. als Abschaltwert für den nachfolgenden Wischzyklus t dienende Einschaltschwelle und die Ausschaltschwelle für den Intervallwischbetrieb sowie die weitere Ausschaltschwelle für den Dauerwischbetrieb festgelegt. Sollte sich während des gesamten Meßzeitraumes jedoch z.B. durch Verdunsten von Schlieren ein höherer maximaler Signalwert ergeben, so wird dieser als neuer Referenzwert in die Schaltungsanordnung 3 eingelesen.

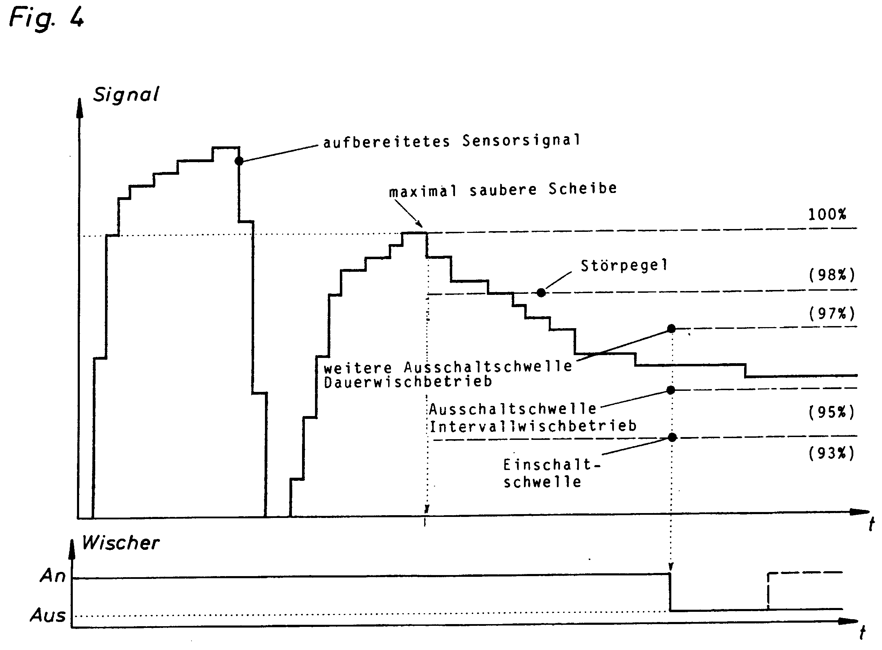

Wie insbesondere aus der Fig. 4 hervorgeht, befindet sich - legt man den sauberen Zustand der Scheibe 7 als Bewertungsmaßstab für die Sensorsignale zugrunde - die Ausschaltschwelle für den Intervallwischbetrieb wertemäßig über der Einschaltschwelle und die weitere Ausschaltschwelle für den Dauerwischbetrieb liegt wertemäßig über der Ausschaltschwelle für den Intervallwischbetrieb.

Verschlechtert sich der saubere Zustand der Scheibe 7 bei eingeschalteter Schalteranordnung 1 in ihrer Schaltstufe Automatik A, so wird zunächst die weitere Ausschaltschwelle für den Dauerwischbetrieb und dann die Ausschaltschwelle für den Intervallwischbetrieb vom Sensorsignal unterschritten. Erst beim Unterschreiten der Einschaltschwelle wird aber der Antriebsmotor 4 in Betrieb gesetzt und die Scheibenwischblätter 5 säubern die Scheibe 7. Durch die Sensorvorrichtung 2 wird ermittelt, inwieweit sich der durch den Wischvorgang der Scheibenwischblätter 5 erreichte saubere Zustand der Scheibe 7 durch z. B. Regen wiederum verschlechtert hat. Wird dabei die Einschaltschwelle nach dem zweiten Überwischvorgang der Sensorvorrichtung 2 innerhalb einer vorgegebenen maximalen Zeitspanne wieder unterschritten, kommt es nach einer entsprechenden Intervallpause tp automatisch zu einem neuerlichen Wischvorgang. Wenn die Einschaltschwelle nach einem Wischvorgang innerhalb der maximal vorgegebenen Zeitspanne nicht mehr unterschritten wird, kommt es auch nicht mehr zu einem vom Zustand der Scheibe 7 abhängigen Wischvorgang. Bei weiter eingeschalteter Schalteranordnung 1 in ihrer Schaltstufe Automatik A wird zwar fortlaufend der Zustand der Scheibe 7 von der Sensorvorrichtung 2 überwacht, ein neuerlicher Wischvorgang wird aber erst dann ausgelöst, wenn die Einschaltschwelle vom Sensorsignal neuerlich unterschritten wird. Um dem Kraftfahrzeugbenutzer deutlich zu machen, daß sich die Schalteranordnung 1 in ihrer Schaltstufe Automatik A befindet, kann aber nach einem gewissen Zeitraum, z. B. nach zwei Minuten, ein Kontrollwischvorgang unabhängig vom Zustand der Scheibe 7 bzw. vom Sensorsignal eingeleitet werden. Wird die Scheibenwischanlage im Intervallwischbetrieb betrieben, überwacht die Schaltungsanordnung das Sensorsignal. Am Ende der Laufzeit t2 wird von der Laufzeiterfassungsanordnung die Parkposition der Scheibenwischblätter 5 festgestellt. Zu diesem Zeitpunkt wird die Abschaltschwelle für den Intervallwischbetrieb abgefragt. Ist diese unterschritten, so wird ohne Intervallpuase tp sofort ein neuer Wischzyklus eingeleitet. Ist die Ausschaltschwelle jedoch zum Ende der Laufzeit t2 nicht unterschritten, so wird von der Schaltungsanordnung 3 die Einschaltschwelle abgefragt. Eine Intervallpause wird eingeleitet und ein neuer Wischzyklus wird erst dann ausgelöst, wenn das Sensorsignal die Einschaltschwelle wieder unterschreitet.

Handelt es sich z. B. um erheblichen Niederschlag, so kommt es je nach Intensität dazu, daß die Scheibenwischanlage kontinuierlich im Dauerwischbetrieb betrieben wird. Am Ende der Laufzeit t2 wird zur Steuerung der Scheibenwischanlage die weitere Ausschaltschwelle abgefragt. Sollte es durch ein leichtes Nachlassen des Niederschlages nicht zum Unterschreiten der weiteren Ausschaltschwelle kommen, so bleibt die Scheibenwischanlage trotzdem für eine bestimmte Anzahl von Wischzyklen z. B. einem weiteren Wischzyklus im Dauerwischbetrieb. Erst wenn auch nach diesem weiteren Wischzyklus die weitere Ausschaltschwelle nicht mehr unterschritten wird, kommt es zum Abschalten der Scheibenwischanlage. Erst wenn dann die Einschaltschwelle wieder unterschritten wird, kommt es gegebenenfalls zu einem Wechsel der Betriebsart, d.h., die Scheibenwischanlage wird entsprechend des Sensorsignales z. B. im Intervall wischbetrieb betrieben. Als Dauerwischbetrieb gilt bei dieser Einrichtung ein Wischvorgang mit zumindest drei unmittelbar hintereinander folgenden Wischzyklen ohne eine zwischengeschaltete Intervallpause tp. Nach drei solchen Wischzyklen wird von der Schaltungsanordnung 3 beim Erreichen der Parkstellung also nicht mehr die Ausschaltschwelle für den Intervallwischbetrieb, sondern die weitere Abschaltschwelle für den Dauerwischbetrieb abgefragt.

Befindet sich die Scheibenwischanlage im Dauerwischbetrieb, wird zur Beurteilung des Sensorsignales nicht nur die Laufzeit t2, sondern auch die Laufzeit t1 herangezogen. Dadurch verdoppelt sich die Wahrscheinlichkeit, daß im Beurteilungszeitraum z. B. ein Regentropfen auf die Meßfläche der Sensorvorrichtung 2 fällt.

Selbstverständlich sind auch vom Ablauf andere Wechsel der Betriebsarten unter vergleichbaren Bedingungen möglich. Durch das Plazieren der jeweils vom Wert her unterschiedlichen Ausschaltschwelle für den Intervallwischbetrieb und weiteren Ausschaltschwelle für den Dauerwischbetrieb kommt es aber auf jeden Fall wegen der kontinuierlichen Übergänge zwischen dem Dauerwischbetrieb und dem Intervallwischbetrieb zu einem für den Kraftfahrzeugbenutzer äußerst komfortabel wirkenden Wischbetrieb.

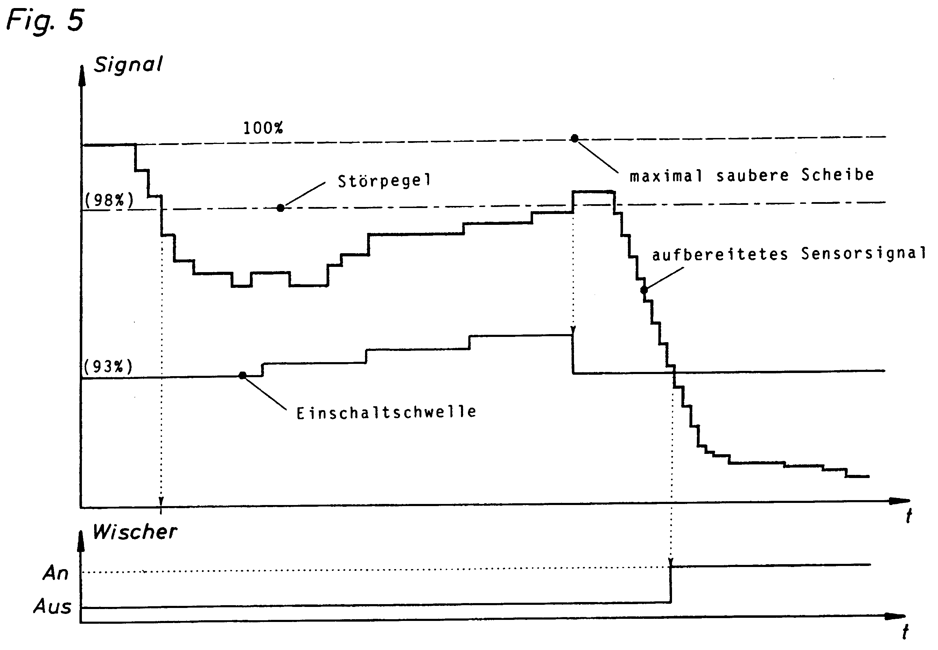

Wie insbesondere aus der Fig. 5 hervorgeht, ist, um weiter komfortsteigernd Fehlfunktionen zu unterbinden, oberhalb der Einschaltschwelle ein Störpegel definiert. Der Störpegel stellt die maximale Empfindlichkeit der Sensorvorrichtung dar. Der Störpegel stellt einen Pegel dar, von dem an mit großer Sicherheit von einem Belag auf der Scheibe 7 ausgegangen werden kann, es sich also höchstwahrscheinlich nicht um undefinierte Störungen handelt. Änderungen des Sensorsignales bezüglich der Sauberkeit der Scheibenoberfläche oberhalb des Störpegels werden als Störeinfluß ohne Bedeutung gewertet und führen zu keinerlei Reaktion. Vorteilhaft ist außerdem, daß durch den Störpegel Langzeiteffekte ausgeglichen (z. B. Temperaturänderungen, Sonneneinstrahlung) werden die zu einer falschen Bewertung des Sensorsignales bezüglich der Sauberkeit der Scheibenoberfläche führen könnten. Werden kleine Änderungen bezüglich der Sauberkeit der Scheibe 7 über einen längeren Zeitraum, z. B. eine Min., beobachtet, die oberhalb des Störpegels liegen, so wird kein Wischvorgang ausgelöst, sondern der aktuell gemessene Wert als neuer Referenzwert für den Zustand einer maximal sauberen Scheibe 7 herangezogen. Ist die Scheibe 7 jedoch z. B. nur leicht benetzt, d. h., die Sauberkeit der Scheibe 7 ist nur insoweit beeinträchtigt, daß der Störpegel unterschritten, jedoch die Einschaltschwelle nicht unterschritten wird, so wird die Einschaltschwelle über einen längeren Zeitraum inkrementiert. Die Größe der Einschaltschwelle wird somit in Abhängigkeit des Zeitraumes, in dem der Störpegel vom Sensorsignal unterschritten bleibt, verändert. Die Veränderung führt dazu, daß die Einschaltschwelle zunehmend empfindlicher eingestellt wird, so daß nach einem bestimmten Zeitraum, z. B. eine Min., das Sensorsignal die inkrementierte Einschaltschwelle unterschreitet, wodurch es zu einem Auslösen eines Wischzyklusses kommt. Ein Wischzyklus wird somit z.B. dann ausgelöst, falls die Scheibe 7 nach einem Wischzyklus nur noch leicht mit Regen benetzt ist, es aber plötzlich zu regnen aufhört. Überschreitet jedoch das Sensorsignal nach einem bestimmten Zeitraum den Störpegel wieder, so wird die inkrementierte Einschaltschwelle ohne Auslösung eines Wischzyklus auf ihre ursprüngliche Größe zurückgesetzt.

Der sich neu auf der Scheibe 7 bildende Belag, kann einerseits durch Niederschlag von feinverteilten kleinen Tröpfchen oder andererseits durch den Niederschlag von grobverteilten großen Tropfen entstehen. Oftmals wird vom Kraftfahrzeugbenutzer der aus wenigen grobverteilten großen Tropfen bestehende Belag auf der Scheibe 7 als störender empfunden als ein aus mehreren feinverteilten kleinen Tröpfchen bestehender Belag. Für die Einrichtung zur Steuerung der Scheibenwischanlage kommt erschwerend hinzu, daß die Wahrscheinlichkeit, daß einer der wenigen grobverteilten großen Tropfen auf die relativ kleine Meßfläche der Sensorvorrichtung 2 fällt, wesentlich geringer ist als die Wahrscheinlichkeit, daß mehrere der feinverteilten kleinen Tröpfchen auf die Meßfläche der Sensorvorrichtung 2 fallen. So kann es sein, daß sich viele grobverteilte große, die Sicht behindernde Tropfen auf der Scheibe 7 befinden, ohne daß einer der Tropfen auf der Meßfläche der Sensorvorrichtung 2 zu liegen kommt. Damit der Wischbetrieb trotzdem auf solche unterschiedlichen Regenformen feinstimmig abgestimmt werden kann, ist die Schaltungsanordnung 3 mit einer zwei Zählerelemente aufweisenden Regenformerfassungseinrichtung 8 versehen. Von der Regenformerfassungseinrichtung 8 werden dabei nur die von der Sensoreinrichtung 2 während eines Erfassungszeitraumes abgegebenen Signale zur Auswertung herangezogen, bei denen eine vorgegebene Änderungsgeschwindigkeit im Signalverlauf überschritten wird. Der Erfassungszeitraum stellt dabei jeweils den Zeitabschnitt dar, der verstreicht ausgehend kurz nach dem zweiten Überwischen eines Scheibenwischerblattes 5 über die Sensorvorrichtung 2 bis zum Einleiten eines neuen Wischzyklus.

Bei diesen Signalen wird von der Regenformerfassungseinrichung 8 die Amplitude der Signaländerung zur Auswertung herangezogen.

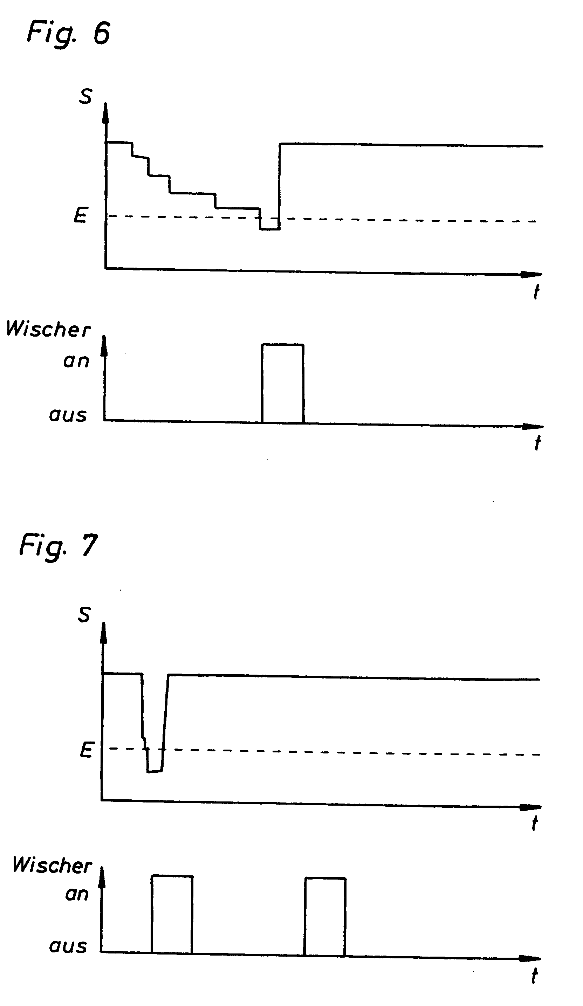

Zur Unterscheidung der verschiedenen Regenformen unterteilt die Regenformerfassungseinrichtung 8 diese Signale in zwei Kategorien und zwar in Signale, deren Amplitude der Signaländerung über und unter einem festgelegten Grenzwert liegen. Bleibt die Amplitude bzw. bleiben die Amplituden der Signaländerung - entsprechend des in der Figur 6 dargestellten Diagrammes - unter diesem festgelegten Grenzwert, so erfolgt eine wertmäßige Änderung des einen der beiden Zählerelemente der Regenformerfassungseinrichtung 8. Für das in der Figur 6 idealisiert dargestellte Signaländerungsbeispiel bezogen auf Niederschlag von vielen feinverteilten Tröpfchen, bedeutet dies eine fünfmalige wertmäßige Änderung des einen der beiden Zählerelemente während des definierten Erfassungszeitraumes. Ausgehend vom Ausgangswert Null wird dabei das eine Zählerelement pro relevanter Signaländerung um den Faktor eins bis zum Wert fünf erhöht. Wird dabei die Einschaltschwelle für den Wischbetrieb vom Signal dabei unterschritten, kommt es zum Auslösen eines Wischzyklus. Nach einem solchermaßen ausgelösten Wischzyklus hängt die Auslösung von weiteren neuen Wischzyklen alleine von dem sich danach einstellenden, von der Sensoreinrichtung 2 abgegebenen Signal ab. Das heißt, wird die Einschaltschwelle für den Wischbetrieb vom Signal danach wiederum unterschritten, wird auch ein neuer Wischzyklus ausgelöst. Kommt es jedoch nicht zum Unterschreiten der Einschaltschwelle, so wird auch kein neuer Wischzyklus eingeleitet.

Geht die Amplitude bzw. gehen die Amplituden der Signaländerung - entsprechend des in der Figur 7 dargestellten Diagrammes - über den festgelegten Grenzwert hinaus, so erfolgt eine wertmäßige Änderung des anderen der beiden Zählerelemente der Regenformerfassungseinrichtung 8. Für das in der Figur 7 idealisiert dargestellte typische Signaländerungsbeispiel bezogen auf Niederschlag von grobverteilten großen Tropfen bedeutet dies, eine einmalige wertmäßige Änderung des anderen der beiden Zählerelemente während des Erfassungszeitraumes. Wird dabei die Einschaltschwelle für den Wischbetrieb vom Signal unterschritten, so wird ein Wischzyklus ausgelöst. Nach einem solchermaßen ausgelösten Wischzyklus wird falls das Signal z.B. auf einem konstant hohen Level (saubere Scheibe) bleibt automatisch nach einem bestimmten Zeitraum ein neuer Wischzyklus ausgelöst. Sollte durch Niederschlag die Einschaltschwelle für den Wischbetrieb zeitlich vor dem automatisch nachgeschalteten neuen Wischzyklus unterschritten werden, wird sofort ein Wischzyklus eingeleitet und der automatische Wischzyklus nicht ausgeführt. Stattdessen werden die beiden Zählerelemente nach dein vorstehend beschriebenen Verfahren von der Schaltungsanordnung 3 neu ausgewertet und eine neue, daran angepaßte Wischstrategie wird festgelegt.

Selbstverständlich treten in der Praxis auch Regenformen auf, die von den beiden idealisiert dargestellten Beispielen abweichen. So kann es selbstverständlich sein, daß während eines Erfassungszeitraumes bedingt durch den gleichzeitigen Niederschlag von kleinen und großen Tropfen, sowohl das eine als auch das andere Zählerelement jeweils wertmäßig eine Änderung erfahren. In diesem Fall werden die Inhalte der beiden Zählerelemente kurz vor dem Einleiten des auszulösenden Wischzyklus nach einem Bewertungsschlüssel von der Schaltungsanordnung 3 zueinander in Bezug gesetzt. Je nach Ergebnis wird dann die dazu passende Wischstrategie festgelegt, daß heißt es folgt - wie bereits beschrieben - ein Wischzyklus ohne bzw. mit automatisch nachgeschaltetem neuen Wischzyklus.

Für weitere Regenformbestimmungen und Steuerungen der Scheibenwischanlage werden die beiden Zählerelemente der Regenformerfassungseinrichtung 8 jeweils kurz nach dem Beginn des ausgelösten Wischzyklus ausgewertet, die Wischstrategie wird festgelegt und die Zählerelemente werden auf ihren Ausgangswert Null zurückgesetzt. Somit ist ein besonders feinfühlig auf verschiedene unterschiedliche Regenformen abgestimmter Scheibenwischbetrieb der Scheibenwischanlage realisiert.

## Patentansprüche

1. Einrichtung zur Steuerung einer Scheibenwischanlage mit einem durch eine Schalteranordnung (1) aktivierbaren Antriebsmotor (4) für mindestens einen Scheibenwischarm bzw. ein Scheibenwischblatt (5) zur Reinigung der Außenfläche einer Scheibe (7), mit einer im Wischbereich auf der Innenfläche der Scheibe (7) angeordneten, aus zumindest einem Strahlensender und zumindest einem Strahlenempfänger bestehenden optoelektronischen Sensorvorrichtung (2), welche während eines Wischzyklusses (t) der Scheibenwischanlage mehrere Male vom Scheibenwischblatt (5) überwischt wird und mit einer mit der Sensorvorrichtung (2) und dem Antriebsmotor (4) verbundenen Schaltungsanordnung (3), wobei die abgegebenen Strahlen zwischen dem Strahlensender und dem Strahlenempfänger durch einen flüssigen oder festen Belag auf der Scheibe (7) beeinflußt und damit die vom Strahlenempfänger abgegebenen Signale in Abhängigkeit von dem auf der Scheibe (7) vorhandenen Belag verändert werden und diese Signale von der Schaltungsanordnung (3) zu Steuersignalen umgeformt werden, durch die der Betrieb des Antriebsmotors (4) beeinflußt wird sowie mit einer dem Antriebsmotor (4) zugeordneten die Parkstellung des zumindest einen Scheibenwischarmes bzw. Scheibenwischblattes (5) ermöglichenden Schaltkontakteinrichtung (6), wobei die Scheibenwischanlage mit Mitteln zur Erkennung des eine letzte Säuberung des Meßbereiches der optoelektronischen Sensorvorrichtung (2) hervorrufenden letzten Überwischvorganges eines Scheibenwischblattes (5) während eines Wischzyklusses (t) versehen ist und wobei zur Bewertung des auf der Scheibe (7) vorhandenen Belages nur die von der Sensorvorrichtung (2) an die Schaltungsanordnung (3) abgegebenen Signale zur Beeinflussung des Antriebsmotors (4) Verwendung finden, **dadurch gekennzeichnet**, daß nur die Signale, welche ausgehend vom Zeitpunkt kurz Verwendung finden nach dem letzten Überwischvorgang bis zum Einleiten eines neuen Wischzyklusses (t) von der Sensorvorrichtung (2) erzeugt werden, und daß der sich kurz nach dem letzten Überwischvorgang einstellende, von der Sensorvorrichtung (2) durch das maximal erreichte Säuberungsergebnis erzeugte Signalwert in die Schaltungsanordnung (3) als neuer Referenzwert für den nachfolgenden Wischzyklus (t) eingelesen wird und eine automatische Anpassung der von diesem Referenzwert abhängigen, als Startwert für den nachfolgenden Wischzyklus (t) dienenden Schaltschwelle erfolgt.

2. Einrichtung nach Anspruch 1, dadurch gekennzeichnet, daß die Mittel zur Erkennung des letzten Überwischvorganges bezogen auf einen Wischzyklus (t) aus zumindest einer zumindest einem Scheibenwischarm bzw. einem Scheibenwischblatt (5) zugeordneten Lichtschrankenanordnung bestehen.

3. Einrichtung nach Anspruch 1, dadurch gekennzeichnet, daß die Mittel zur Erkennung des letzten Überwischvorganges bezogen auf einen Wischzyklus (t) aus zumindest einer zumindest einem Scheibenwischarm bzw. einem Scheibenwischblatt (5) zugeordneten Hall-Schaltanordnung bestehen.

4. Einrichtung nach Anspruch 1, dadurch gekennzeichnet, daß die Mittel zur Erkennung des letzten Überwischvorganges bezogen auf einen Wischzyklus (t) aus einer in die Schaltungsanordnung (3) integrierten, einen für diesen Vorgang typischen Verlauf der Signale erkennenden Signalmustererkennungsanordnung bestehen.

5. Einrichtung nach Anspruch 1, dadurch gekennzeichnet, daß die Mittel zur Erkennung des letzten Überwischvorganges bezogen auf einen Wischzyklus (t) aus einer in die Schaltungsanordnung (3) integrierten, den Wischzyklus (t) zeitlich in Einzelheiten erfassenden Laufzeiterfassungsanordnung bestehen, wobei die Laufzeiterfassungsanordnung zur Generierung des Start- bzw. Endsignales für die Laufzeit des zumindest einen Scheibenwischblattes (5) mit der die Parkstellung ermöglichenden Schaltkontakteinrichtung (6) verbunden ist und mit einem für die jeweiligen Scheibenwischanlage spezifischen, verschiedene Laufzeiteinflüsse berücksichtigenden Faktor beaufschlagt wird.

6. Einrichtung nach Anspruch 1, dadurch gekennzeichnet, daß die Mittel zur Erkennung des letzten Überwischvorganges bezogen auf einen Wischzyklus (t) aus einer Kombination der in die Schaltungsanordnung (3) integrierten Signalmustererkennungsanordnung und Laufzeiterfassunganordnung bestehen.

7. Einrichtung nach einem der Ansprüche 1 bis 6, dadurch gekennzeichnet, daß durch ein Einschalten der Schalteranordnung (1) auf jeden Fall ein Wischzyklus (t) zur Bildung eines Ausgangsreferenzwertes ausgelöst wird.

8. Einrichtung nach einem der Ansprüche 1 bis 7, dadurch gekennzeichnet, daß bei eingeschalteter Schalteranordnung (1) nach Anlauf einer bestimmten Intervallpausenzeit zur Bildung eines neuen Referenzwertes auf jeden Fall ein neuer Wischzyklus (t) ausgelöst wird.

9. Einrichtung nach Anspruch 1, dadurch gekennzeichnet, daß die Schaltungsanordnung (3) zur Beeinflussung des Antriebsmotors (4) mit einer vom Sensorsignal abhängigen Einschaltschwelle und einer Ausschaltschwelle für den Intervallwischbetrieb sowie einer davon unterschiedlichen weiteren Ausschaltschwelle für den Dauerwischbetrieb versehen ist.

10. Einrichtung nach Anspruch 1 oder einem der folgenden Ansprüche, dadurch gekennzeichnet, daß die für den Intervallwischbetrieb des Antriebsmotors (4) vorgesehene Ausschaltschwelle in Bezug auf die Sauberkeit der Scheibe (7) wertemäßig höher als die Einschaltschwelle ausgelegt ist.

11. Einrichtung nach Anspruch 1 oder einem der folgenden Ansprüche, dadurch gekennzeichnet, daß die für den Dauerwischbetrieb des Antriebsmotors (4) vorgesehene weitere Ausschaltschwelle in Bezug auf die Sauberkeit der Scheibe (7) wertemäßig höher als die Ausschaltschwelle für den Intervallwischbetrieb ausgelegt ist.

12. Einrichtung nach Anspruch 1 oder einem der folgenden Ansprüche, dadurch gekennzeichnet, daß der Antriebsmotor (4) ausgehend vom Dauerwischbetrieb durch eine Halteeinrichtung für zumindest einen weiteren Wischzyklus in Betrieb gehalten wird, auch wenn das Sensorsignal die weitere Ausschaltschwelle für den Dauerwischbetrieb wieder überschritten hat.

13. Einrichtung nach Anspruch 1 oder einem der folgenden Ansprüche, dadurch gekennzeichnet, daß die Einschaltschwelle eine variable Größe darstellt, die, unterschreitet das Sensorsignal den Störpegel, in kurzen Zeitabständen wertemäßig angehoben wird.

14. Einrichtung nach Anspruch 1 oder einem der folgenden Ansprüche, dadurch gekennzeichnet, daß die Größe des Anhebungswertes der Einschaltschwelle von der sich unter dem Signalverlauf des Störpegels bildenden Fläche abhängig ist.

15. Einrichtung nach Anspruch 1 oder einem der folgenden Ansprüche, dadurch gekennzeichnet, daß die Einschaltschwelle wieder auf ihren ursprünglichen Wert zurückgeführt wird, wenn das Sensorsignal innerhalb eines bestimmtes Zeitraumes nach dem Unterschreiten des Störpegels diesen wieder überschreitet.

16. Einrichtung nach Anspruch 1, dadurch gekennzeichnet, daß die Schaltungsanordnung (3) mit einer zumindest zwei Zählerelemente aufweisenden Regenformerfassungseinrichtung (8) versehen ist, wobei von der Regenformerfassungseinrichtung (8) nur die von der Sensoreinrichtung (2) während des Erfassungszeitraumes abgegeben Signale erfaßt werden, die eine vorgegebene Änderungsgeschwindigkeit überschreiten, bei diesen die Änderungsgeschwindigkeit überschreitenden Signalen erfaßt die Regenformerfassungseinrichtung (8) die Amplitude der Signaländerung, wobei bleibt die Amplitude unterhalb eines festgelegten Grenzwertes erfolgt eine wertmäßige Änderung des einen der beiden Zählerelemente und geht die Amplitude über diesen festgelegten Grenzwert hinaus, erfolgt eine wertmäßige Änderung des anderen der beiden Zählerelemente, wobei die Inhalte der beiden Zählerelemente zur Festlegung einer Wischstrategie von der Schaltungsanordnung (3) ausgewertet werden und bis maximal kurz vor Beginn eines neuen Erfassungszeitraumes gespeichert bleiben.

17. Einrichtung nach Anspruch 16, dadurch gekennzeichnet, daß zur Beeinflussung des Antriebsmotors (4) der Inhalt der zumindest zwei zur Regenformerfassungseinrichtung (8) gehörigen Zählerelemente nach einem Bewertungsschlüssel von der Schaltungsanordnung (3) zueinander in Bezug gesetzt und ausgewertet werden.

18. Einrichtung nach einem der Ansprüche 16 oder 17, dadurch gekennzeichnet, daß die Auswertung der Inhalte der Zählerelemente der Regenformerfassungseinrichtung (8) beim Einleiten des jeweils nachfolgenden Wischzyklus erfolgt, wobei die Inhalte der Zählerelemente nach der Auswertung auf ihren Ausgangswert zurückgesetzt werden.

19. Einrichtung nach Anspruch 17, dadurch gekennzeichnet, daß als Ausgangswert für die Inhalte der zur Regenformerfassungseinrichtung (8) gehörigen Zählerelemente der Wert Null Verwendung findet.

## Claims

1. Device for the control of a windscreen wiper system, including a drive motor (4) which can be activated by means of a switch arrangement (1), the motor being allocated to at least one windscreen wiper arm or windscreen wiper blade (5) for the cleaning of the outer surface of a screen (7), also including an optoelectronic sensor device (2) on the inside of screen (7) within the wiping area consisting of at least one beam transmitter and at least one beam receiver, which during a wipe cycle (t) is wiped over several time by wiper blade (5), and also including a switching arrangement (3) connected to the drive motor (4) and the sensor device (2), whereby the emitted beams are influenced between the beam emitter and the beam receiver by a liquid or solid deposit on screen (7) so that the signals originating from the beam receiver are changed in dependence on the deposit present on the screen, these signals being transformed into control signals by switching arrangement (3), the signals in turn influencing the operation of drive motor (4), a switch contact device (6) also being provided which is allocated to drive motor (4) and enables the park position of the at least one wiper arm or wiper blade (5), whereby the windscreen wiper system is equipped with means for recognising the last wiper crossing of the measuring area of the optoelectronic sensor device (2) of a wiper blade (5) within a wipe cycle (t) and whereby, for the evaluation of the deposit present on screen (7), only the signals transferred from the sensor device (2) to the switching arrangement (3) are used to influence the drive motor (4), **characterised in** that only the signals are utilized which are generated by the sensor device (2) during the time interval starting shortly after the last wiper crossing and ending with the initiation of a new wipe cycle (t), and that the signal value generated shortly after the last wipe cycle by the sensor device (2) in the switching arrangement (3) by means of reaching the maximum cleaning outcome is entered as the new reference value for the subsequent wipe cycle (t) and an automatic adjustment of the operating point takes place in depencence on this reference value which serves as the starting value for the subsequent wipe cycle (t).

2. Device according to Claim 1, characterised in that the means for recognising the last wiper crossing of a wipe cycle (t) consist of at least one light barrier arrangement allocated to at least one wiper arm or wiper blade (5).

3. Device according to Claim 1, characterised in that the means for recognising the last wiper crossing of a wipe cycle (t) consist of at least one Hall switching arrangement allocated to at least one wiper arm or wiper blade (5).

4. Device according to Claim 1, characterised in that the means for recognising the last wiper crossing of a wipe cycle (t) consist of a signal pattern recognition device which is integrated in switching arrangement (3) and which recognises a signal pattern which is typical of such crossing.

5. Device according to Claim 1, characterised in that the means for recognising the last wiper crossing of a wipe cycle (t) consist of a travel time determination device which is integrated in switching arrangement (3) and which determines different time periods within a wipe cycle (t), whereby, in order to generate the start and/or end signal for the travel time of at least on screen wiper blade (5), the travel time determination device is connected with the switch contact device which makes the wiper park position possible and is influenced by a multiplying factor which is specific to the individual windscreen wiper system, the factor taking into consideration various elements which influence the wiper travel time.

6. Device according to Claim 1, characterised in that the means for recognising the last wiper crossing of a wipe cycle (t) consist of a combination of the signal pattern recognition device and the travel time determination device contained in switching arrangement (3).

7. Device to any of Claims 1 to 6, characterised in that a wipe cycle (t) is at any event initiated through the switching-on of switch arrangement (1) for the purpose of forming a base reference value.

8. Device according to any of Claims 1 to 7, characterised in that, when the switch arrangement (1) is on, a new wipe cycle (t) is initiated in any event after the elapse of a defined pause time for the formation of a new reference value.

9. Device according to Claim 1, characterised in that switching arrangement (3) is provided with a switch-on threshold dependent on the sensor signal and a switch-off threshold for intermittent operation and a further, different switch-off threshold for continuous operation for the influencing of drive motor (4).

10. Device according to Claim 1 or any of the following claims, characterised in that the switch-off threshold for the intermittent operation of drive motor (4) is higher in value than the switch-on threshold with relation to the cleanliness of screen (7).

11. Device according to Claim 1 or any of the following claims, characterised in that the further threshold provided for continuous wiping operation of the drive motor is higher in value that the switch-off threshold for intermittent operation with relation to the cleanliness of screen (7).

12. Device according to Claim 1 or any of the following claims, characterised in that drive motor (4), starting from the continuous wipe mode, is kept in operation by a retaining device for at least one further wipe cycle, even when the sensor signal has again exceeded the further switch-off threshold for the continuous wiping mode.

13. Device according to Claim 1 or any of the following claims, characterised in that the switch-on threshold is a variable value, which is increased in value at short intervals if the sensor signal falls below the interference level.

14. Device according to Claim 1 or any of the following claims, characterised in that the value of the increase in the switch-on threshold is dependent on the signal pattern and/or duration which is recognised below the interference level.

15. Device according to Claim 1 or any of the following claims, characterised in that the switch-on threshold is returned to its original value when the sensor signal again exceeds the interference threshold within a given interval of having fallen below it.

16. Device according to Claim 1, characterised in that switching arrangement (3) includes a rain form detection arrangement (8) which is provided with at least two counter elements, whereby only those sensor signals arising during the measuring period are detected which exhibit a rate of change which exceeds a certain level, the rain form detection arrangement (8) detecting the amplitude of the signal change of these signals, a change of value of one of the counter elements being implemented if the amplitude remains below a defined threshold value and a change of value of the other counter element being implemented if the amplitude exceeds this defined threshold value, the status of both courting elements being evaluated by the switching arrangement (3) for the establishment of a wiping strategy and remaining stored until at the latest shortly before the beginning of a new measuring period.

17. Device according to Claim 16, characterised in that the status of the at least two counting elements allocated to rain form detection arrangement (8) for the influencing of drive motor (4) are placed in relation to one another and analysed by switching arrangement (3) using an evaluation scheme.

18. Device according to Claim 16 or Claim 17, characterised in that the evaluation of the status of the counting elements allocated to rain form detection arrangement (8) is implemented at the initiation of the following wipe cycle, the status of the counter element being returned to their original starting values after the evaluation.

19. Device according to Claim 17, characterised in that the originals starting value for the status of the counter elements allocated to the rain form detection arrangement (8) is the value zero.

## Revendications

1. Dispositif de commande d'un système d'essuie-glaces comportant un moteur d'entraînement (4) activé par un dispositif de commutateur (1), pour au moins un bras essuie-glace ou, le cas échéant, une lamelle essuie-glace (5), pour le nettoyage de la surface extérieure d'une vitre (7), avec, placé dans le domaine d'essuyage sur la surface intérieure de la vitre (7), un dispositif de sonde optoélectronique (2), composé d'au moins un émetteur de rayons et d'au moins un récepteur de rayons, dispositif sur lequel passe la lamelle essuie-glace (5) à plusieurs reprises au cours d'un cycle d'essuyage (t) du système d'essuie-glaces,
disposant d'un dispositif de commutation (3) relié au dispositif de sonde (2) et au moteur d'entraînement (4), les rayons émis entre l'émetteur de rayons et le récepteur de rayons étant influencés par la présence d'une couche liquide ou solide sur la vitre (2), de sorte que les signaux émis par l'émetteur de rayons peuvent être modifiés en fonction de la couche se trouvant sur la vitre (7) et que ces signaux sont transformés par le dispositif de commutation (3) en signaux de commande, signaux de commande par l'intermédiaire desquels le fonctionnement du moteur d'entraînement (4) est influencé,
et disposant d'un dispositif de contact de commutation de commande (6) attribué au moteur d'entraînement (4), permettant la position de parking d'au moins un bras essuie-glace ou, le cas échéant, une lamelle essuie-glace (5), le système d'essuie-glaces étant équipé de moyens qui lui permettant de reconnaître le dernier passage d'une lamelle d'essuie-glace (5) pendant un cycle d'essuyage (t), passage provoquant un dernier nettoyage du domaine de mesure du dispositif de sonde optoélectronique (2), et seuls les signaux envoyés par le dispositif de sonde (2) au dispositif de commutation (3) pour influencer le moteur d'entraînement (4) étant utilisés pour l'évaluation de la couche se trouvant sur la vitre (7),
**caractérisé par le fait** que
seuls les signaux produits par le dispositif de sonde (2) en partant du moment suivant immédiatement le dernier passage jusqu'à la génération d'un nouveau cycle d'essuyage (t) sont utilisés et que la valeur de signal, produite par le dispositif de sonde (2) de par le résultat de nettoyage maximal atteint, valeur de signal obtenue peu après le dernier passage, est lue dans le dispositif de commutation (3) à titre de valeur de référence nouvelle pour le cycle d'essuyage suivant (t), une adaptation du seuil de commutation, dépendant de cette valeur de référence et faisant fonction de valeur de départ pour le cycle d'essuyage (t) suivant, s'effectuant automatiquement.

2. Dispositif correspondant aux droits revendiqués en 1, caractérisé par le fait que les moyens de reconnaissance du dernier passage rapporté à un cycle d'essuyage (t) sont constitués d'au moins une barrière photoélectrique attribuée au moins à un bras essuie-glace ou, le cas échéant, à une lamelle essuie-glace.

3. Dispositif correspondant aux droits revendiqués en 1, caractérisé par le fait que les moyens de reconnaissance du dernier passage rapporté à un cycle d'essuyage (t) sont constitués d'au moins un système de commutation de Hall attribué au moins à un bras essuie-glace ou, le cas échéant, à une lamelle essuie-glace.

4. Dispositif correspondant aux droits revendiqués en 1, caractérisé par le fait que les moyens de reconnaissance du dernier passage rapporté à un cycle d'essuyage (t) sont constitués d'un système de reconnaissance de modèles de signaux intégré dans le dispositif de commutation (3), reconnaissant le parcours typique des signaux pour ce processus.

5. Dispositif correspondant aux droits revendiqués en 1, caractérisé par le fait que les moyens de reconnaissance du dernier passage rapporté à un cycle d'essuyage (t) sont constitués d'un dispositif de saisie des durées de parcours intégré dans le dispositif de commutation (3), saisissant en détail de manière temporelle le cycle d'essuyage (t), le dispositif de saisie des durées de parcours pour la génération du signal de mise en marche et d'arrêt pour le parcours d'au moins une des lamelles essuie-glace (5) étant relié au dispositif de contact de commutation de commande (6) permettant la position de parking et étant grevé d'un facteur spécifique du dispositif d'essuie-glaces respectif, facteur tenant compte des diverses influences du temps de parcours.

6. Dispositif correspondant aux droits revendiqués en 1, caractérisé par le fait que les moyens de reconnaissance du dernier passage rapporté à un cycle d'essuyage (t) sont constitués d'une combinaison du dispositif de reconnaissance de modèles de signaux intégré au dispositif de commutation (3) et du dispositif de saisie des durées de parcours.

7. Dispositif correspondant à l'un des droits revendiqués en 1 à 6, caractérisé par le fait que la mise en marche du dispositif de commutateur (1) engendre en tous les cas un cycle d'essuyage (t) pour la constitution d'une valeur de référence de départ.

8. Dispositif correspondant à l'un des droits revendiqués en 1 à 7, caractérisé par le fait que, le dispositif de commutateur (1) étant en marche, un nouveau cycle d'essuyage (t) est déclenché dans tous les cas, au bout d'un certain intervalle d'interruption, en vue de la constitution d'une nouvelle valeur de référence.

9. Dispositif correspondant aux droits revendiqués en 1, caractérisé par le fait que le dispositif de commutation (3) devant influencer le moteur d'entraînement (4) est muni d'un seuil de commutation de mise en service dépendant du signal de la sonde et d'un seuil de commutation de coupure pour le mode d'essuyage intermittent, ainsi que d'un autre seuil de commutation de coupure, différent, pour le mode d'essuyage en continu.

10. Dispositif correspondant aux droits revendiqués en 1 ou l'un des suivants, caractérisé par le fait que le seuil de commutation de coupure prévu pour le mode d'essuyage intermittent du moteur d'entraînement (4) a une valeur plus élevée, rapportée à la propreté de la vitre (7), que le seuil de commutation de mise en service.

11. Dispositif correspondant aux droits revendiqués en 1 ou l'un des suivants, caractérisé par le fait que l'autre seuil de commutation de coupure, prévu pour le mode d'essuyage en continu du moteur d'entraînement (4) a une valeur plus élevée, rapportée à la propreté de la vitre (7), que le seuil de commutation de coupure pour le mode d'essuyage intermittent.

12. Dispositif correspondant aux droits revendiqués en 1 ou l'un des suivants, caractérisé par le fait que le moteur d'entraînement (4), partant du mode d'essuyage en continu, est maintenu en service pour au moins un cycle supplémentaire d'essuyage par l'intermédiaire d'un dispositif de maintien, même si le signal de la sonde a déjà redépassé l'autre seuil de commutation de coupure pour le mode d'essuyage en continu.

13. Dispositif correspondant aux droits revendiqués en 1 ou l'un des suivants, caractérisé par le fait que le seuil de commutation de mise en service est une variable dont la valeur est relevée à de brefs intervalles si le signal de la sonde dépasse vers le bas le niveau de nuisance.

14. Dispositif correspondant aux droits revendiqués en 1 ou l'un des suivants, caractérisé par le fait que la grandeur de la valeur de relèvement du seuil de commutation de mise en service dépend de la surface se formant au-dessous du parcours du signal du niveau de nuisance.

15. Dispositif correspondant aux droits revendiqués en 1 ou l'un des suivants, caractérisé par le fait que le seuil de commutation de mise en service est remis à sa valeur d'origine si, dans le cadre d'une certaine période, le signal de la sonde franchit à nouveau vers le haut le niveau de nuisance après l'avoir franchi vers le bas.

16. Dispositif correspondant aux droits revendiqués en 1, caractérisé par le fait que le dispositif de commutation (3) est muni d'un dispositif de saisie des types de pluie (8) comportant au moins deux éléments compteurs, le dispositif de saisie des types de pluie (8) ne saisissant que les signaux envoyés au cours du temps de saisie par le dispositif de sonde (2) dépassant la vitesse de modification donnée; au niveau de ces signaux dépassant la vitesse de modification, le dispositif de saisie des types de pluie (8) saisit l'amplitude de la modification des signaux; ce faisant, si l'amplitude reste au-dessous d'une valeur limite déterminée, il s'effectue une modification de la valeur de l'un des deux compteurs, si l'amplitude dépasse cette valeur limite déterminée, il s'effectue une modification de la valeur de l'autre des deux compteurs, les contenus des deux compteurs étant évalués par le dispositif de commutation (3) pour déterminer la stratégie d'essuyage et restant mémorisés jusque peu avant le début d'une nouvelle période de saisie au maximum.

17. Dispositif correspondant aux droits revendiqués en 16, caractérisé par le fait que, pour influencer le moteur d'entraînement (4), les contenus des deux compteurs appartenant au moins au dispositif de saisie des types de pluie (8) sont mis en rapport l'un avec l'autre et évalués par le dispositif de commutation (3) en fonction d'une clé d'évaluation.

18. Dispositif correspondant à l'un des droits revendiqués en 16 ou 17, caractérisé par le fait que l'évaluation des contenus des compteurs du dispositif de saisie des types de pluie (8) s'effectue lors de la génération du cycle d'essuyage suivant respectivement, les contenus des compteurs étant remis à leur valeur initiale après l'évaluation.

19. Dispositif correspondant aux droits revendiqués en 17, caractérisé par le fait que la valeur initiale utilisée pour les contenus des compteurs appartenant au dispositif de saisie des types de pluie (8) est zéro.
